# EUROPEAN PATENT APPLICATION

(11) **EP 4 793 101 A1**
(43) Date of publication of application: **19.08.2026**
(21) Application number: 26157810.8
(22) Date of filing: 11.02.2026
(51) Int. Cl.: B60R 1/26, B60K 35/22, B60K 37/20, B60R 11/02, B60R 13/02

(54) **REAR-VIEW DISPLAY UNIT**

(30) Priority: 14.02.2025 GB 202502254
(71) Applicant: Jaguar Land Rover Limited, Coventry, Warwickshire CV3 4LF (GB)
(72) Inventor: Little, Oliver, Coventry, CV3 4LF (GB); Lad, Hitesh, Coventry, CV3 4LF (GB)
(74) Representative: Jaguar Land Rover Patents Department

(57) **Abstract**

Aspects of the present invention relate to a rear-view display unit (200) for an automotive vehicle. The rear-view display unit (200) is made up of a rear-view display screen (220) which is electrically connected to a printed circuit board (210) and a cover portion (240) positioned in front of the rear-view display screen. The cover portion features a viewing window through which at least part of an active display area of the rear-view display screen is visible. Notably, the viewing window is configured such that the vehicle operator is presented with a different, more ergonomic viewing area during use.

## Description

### TECHNICAL FIELD

The present disclosure relates to a rear-view display unit. Aspects of the invention relate to a rear-view display unit for an automotive vehicle, to a rear-view display system comprising said rear-view display unit, and to a vehicle comprising said rear-view display system.

### BACKGROUND

It is known to provide rear-view mirrors within vehicle cabins to allow a vehicle operator or occupant to view an area directly behind the vehicle. Such mirrors are often mounted on (or adjacent to) the roof of the vehicle cabin.

However, in vehicles featuring a low roofline, or in vehicles in which the windscreen is steeply raked, positioning the rear-view mirror on (or adjacent to) the roof of the vehicle cabin can result in the rear-view mirror being positioned very close to the headspace of the vehicle operator and may therefore obstruct a portion of the vehicle operator's forward view out of the vehicle cabin.

As such, in some vehicles, it may be beneficial to locate the rear-view mirror at other locations about the vehicle cabin.

However, it shall be appreciated that existing rear-view mirror technologies are typically designed to be mounted from the roof of the vehicle cabin or an upper region of the vehicle windscreen and hence may not be ergonomically designed for mounting at other locations about the vehicle cabin. It is an aim of the present invention to address one or more of the disadvantages associated with the prior art.

### SUMMARY OF THE INVENTION

Aspects and embodiments of the invention provide a rear-view display unit for an automotive vehicle, a rear-view display system comprising said rear-view display unit, and a vehicle comprising said rear-view display system as claimed in the appended claims.

According to an aspect of the invention, there is provided a rear-view display unit for an automotive vehicle, comprising:
a printed circuit board;
a rear-view display screen electrically connected to the printed circuit board, said rear-view display screen having an active display area;
a display unit housing for encasing the printed circuit board and the rear-view display screen; and
a cover portion positioned in front of the rear-view display screen, said cover portion comprising a viewing window through which at least part of the active display area is visible,
wherein the active display area has a first area, and wherein the viewing window has a second area which is less than the first area.

Advantageously, it has been found that traditional "roof mounted" rear-view display screens are not ergonomic when mounted at other regions about the vehicle cabin. As such, the claimed rear-view display unit provides a means for presenting the vehicle operator with a different, more ergonomic display area without having to replace (or otherwise alter) the shape or size of the rear-view display screen.

The term "active display area" is defined herein to mean an area on a screen on which an image may be displayed.

It shall be appreciated that the image displayed on the active display area may be an image of an area behind the automotive vehicle. Said image may, for example, be captured by a camera mounted on the vehicle.

Optionally, the cover portion comprises an integrated shroud extending around a periphery of the viewing window.

Advantageously, the provision of the aforementioned shroud helps to ensure that the vehicle operator is only able to view the "ergonomically optimal" portion of the rear-view display screen which is visible through the viewing window.

Optionally, the viewing window may comprise a lens. Optionally, the lens may be a convexly curved lens.

Advantageously, this provision helps to provide the rear-view display unit with adjusted display magnification and therefore enables the rear-view display unit to be located further away from the vehicle operator within the vehicle cabin.

Optionally, the convexly curved lens may have a radius of curvature in the range of 150mm to 200mm.

Advantageously, it has been found that incorporating the aforementioned degree of curvature into the lens helps to reduce glare which may be experienced by the vehicle operator due to sunlight (or others forms of artificial light) reflecting off the lens.

Optionally, the cover portion may comprise a pair of laterally-extending tabs for mounting the cover portion to a corresponding mounting bracket.

Advantageously, the laterally-extending tabs and associated mounting bracket provide an effective means for better securing the claimed rear-view display unit to a vehicle instrument panel.

Optionally, the first area may have a first shape, and the second area may have a second shape which is different to the first shape.

Advantageously, this provision enables the vehicle operator to be presented with a different, more ergonomically-shaped display area without having to replace (or otherwise alter) the shape or size of the rear-view display screen.

Optionally, the first area may be trapezoidal and/or the second area may be rectangular.

Advantageously, it has been found that rectangular shaped viewing windows are particularly ergonomic for rear-view display units which are mounted away from the roof of the vehicle cabin.

Optionally, the display unit housing may further comprise a pair of rearwardly extending projections for mounting the rear-view display unit to a corresponding mounting bracket.

Advantageously, the aforementioned projections are designed to act as spacers and thereby help to ensure that a space (or air-gap) is maintained between the display unit housing and the mounting bracket which helps air to circulate about the display unit housing during use.

It shall also be appreciated that the provision of said projections also helps to minimise the number of thermal contact points between the rear-view display unit and the associated mounting bracket.

Optionally, the printed circuit board, the rear-view display screen, the display unit housing and the cover portion may be spaced apart in the fore-aft direction such that a first air channel is defined between the cover portion and the rear-view display screen, a second air channel is defined between the rear-view display screen and the printed circuit board, and a third air channel is defined between the printed circuit board and the display unit housing.

Advantageously, it has been found that the provision of such air channels helps to further optimise air circulation around the components housed within the cavity which helps to improve the overall cooling afforded to said components during use.

Optionally, the display unit housing may comprise a base portion and at least one peripheral sidewall which together define a cavity, and the base portion may comprise a plurality of apertures configured to allow air to circulate about the rear-view display screen and/or the printed circuit board housed within said cavity.

Advantageously, it has been found that the provision of such apertures helps to further optimise air circulation around the cavity and therefore helps to further improve the overall cooling afforded to the respective components housed therein.

According to another aspect of the invention, there is provided a rear-view display system for an automotive vehicle comprising:
a camera configured to capture an image of an area behind an automotive vehicle during use, and
a rear-view display unit according to the previous aspect.

According to yet another aspect of the invention, there is provided a vehicle comprising the rear-view display system according to the previous aspect.

Optionally, the vehicle may comprise an instrument panel structure, and the rear-view display unit may be positioned adjacent to an upper surface of said instrument panel structure.

Advantageously, it has been found that by positioning the rear-view display unit at a more forward position within the vehicle cabin, the rear-view display unit can be placed closer to the vehicle operator's nominal field-of-view. This helps to improve visual comfort since the forward position of the rear-view display unit helps to reduce the amount by which the eye of the vehicle operator needs to adjust when switching between viewing the road and the rear-view display unit.

Furthermore, it shall also be appreciated that by positioning the rear-view display unit adjacent the upper surface of the instrument panel structure, the rear-view display unit is positioned closer to the vehicle operator's nominal "look-down-angle". This helps to further improve user eye comfort since, again, the amount by which the eye of the vehicle operator needs to adjust when switching between viewing the road and the rear-view display unit is reduced.

According to further aspect of the invention, there is provided a rear-view display unit for an automotive vehicle, comprising:
a printed circuit board;
a rear-view display screen electrically connected to the printed circuit board, said rear-view display screen having an active display area; and
a display unit housing for encasing the printed circuit board and the rear-view display screen.

Within the scope of this application, it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 shows a schematic representation of a vehicle;
Figure 2 shows a schematic representation of a portion of a vehicle cabin;
Figure 3 shows a perspective view of a rear-view display unit in accordance with an embodiment of the invention;
Figure 4 shows a rear perspective view of the rear-view display unit illustrated in Figure 3;
Figure 5 shows a further rear perspective view of the rear-view display unit illustrated in Figure 3 in which the mounting bracket is omitted such that the cooling apertures provided in the base portion of the display unit housing are visible; and
Figure 6 shows a front view of the rear-view display unit illustrated in Figure 3 in which the viewing window is schematically depicted via a dashed box.

### DETAILED DESCRIPTION

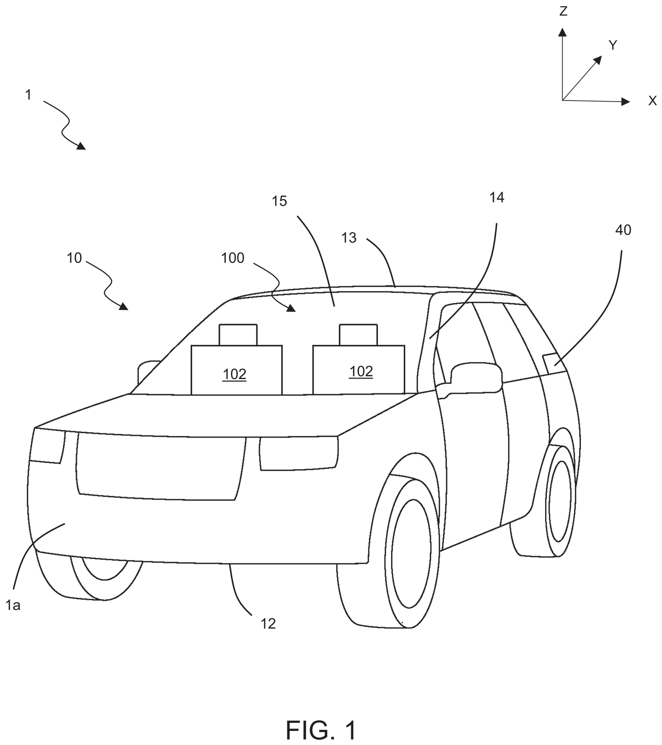

A vehicle 1 in accordance with an embodiment of the present invention is described herein with reference to the accompanying Figure 1.

As shown in Figure 1, the vehicle 1 comprises a vehicle body 10 having a floor structure 12 and a roof structure 13. The vehicle body 10 also defines a vehicle cabin 100 (or "interior") in which passengers may sit.

The floor structure 12 defines at least a lower portion of the vehicle cabin 100 and may be characterised as corresponding to the floor and sub-structure of the vehicle 1, for example between its front axle and its rear axle. The roof structure 13 defines at least an upper portion of the vehicle cabin 100.

The vehicle body 10 further comprises pillars 14 (which may be termed A-pillars) which support both the roof structure 13 of the vehicle body 10 and a windscreen 15.

It shall be appreciated that the vehicle body 10 may also be further defined by one or more additional vehicle structures which, along with the aforementioned structures, may collectively be referred to as a body in white or a portion of the body in white. For example, the body in white may comprise a series of vehicle structures coupled together, for example using welding.

As shown in Figure 1, the vehicle cabin 100 may include one or more seats 102 to support a passenger and/or an operator of the vehicle 1. Generally, an occupant of the vehicle cabin 100 may be referred to as a vehicle operator.

The vehicle cabin 100 may be positioned towards the front 1a of the vehicle 1, the front 1a of the vehicle 1 being defined herein by the usual direction of travel of the vehicle 1. The vehicle cabin 100 may also extend across substantially the full width of the vehicle 1.

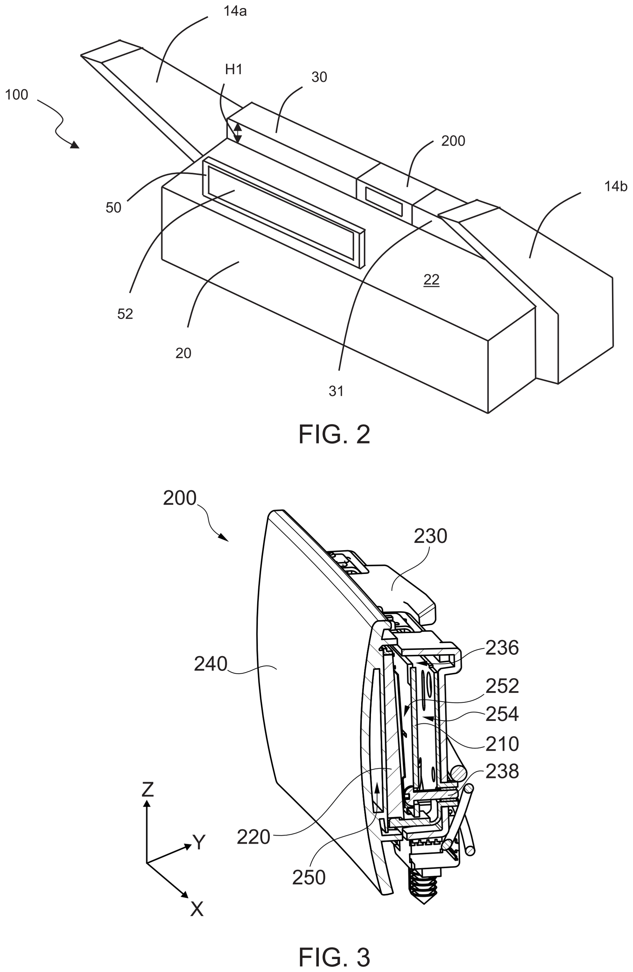

An example of a vehicle cabin 100 comprising a first pillar 14a and a second pillar 14b on opposite sides of the vehicle cabin 100 is shown more clearly in Figure 2. It shall be appreciated that Figure 2 shows a schematic view of a portion of the vehicle cabin 100.

As shown in Figure 2, the vehicle cabin 100 comprises an instrument panel structure 20 that extends across the width of the vehicle cabin 100. The instrument panel structure 20 is positioned at a forward location of the vehicle cabin 100, forward here defined as being towards the front 1a of the vehicle 1.

The instrument panel structure 20 defines a support structure for housing and/or supporting components within the vehicle cabin 100. Examples of these components may include an array of operator controls, a steering wheel, a glove compartment, and associated driving instrumentation, such as a speedometer, tachometer, odometer, oil gauge, fuel gauge, turning indicators, gearshift position inductors, navigation system display etc., for assisting the vehicle operator in controlling, operating and maintaining the vehicle 1.

The instrument panel 20 may abut the A-pillars 14a, 14b as shown in Figure 2, which further support the windscreen 15 of the vehicle 1 (omitted from Figure 2 for clarity).

In the illustrated embodiment, the aforementioned driving instrumentation, such as the speedometer, tachometer, odometer, oil gauge, fuel gauge, turning indicators, gearshift position inductors, navigation system display etc., is incorporated into a main display unit 50 which is mounted atop the instrument panel structure 20.

As shown in Figure 2, the main display unit 50 extends upwardly from an upper surface 22 of the instrument panel structure 20. The main display unit 50 comprises a display screen 52 configured to display any number of vehicle parameters, such as for example vehicle speed, vehicle temperature, vehicle mode, or infotainment.

The main display unit 50 may be the primary interface between the vehicle operator and the vehicle 1, and hence it may be beneficial to position the main display unit 50 close to, for example in front of, the vehicle operator. As such, the main display unit 50 may be positioned towards a first side of the instrument panel structure 20 and the vehicle cabin 100 as shown in Figure 2.

The vehicle cabin 100 may further comprises a trim panel 30 coupled to the instrument panel structure 20. As shown in Figure 2, in the illustrated embodiment the trim panel 30 upstands from the upper surface 22 of the instrument panel structure 20 and extends at least partially across the width of the vehicle cabin 100. The upper surface 22 of the instrument panel structure 20 may be substantially planar as shown in Figure 2, which may improve the ease of coupling the trim panel 30 to the instrument panel structure 20.

The trim panel 30 may be provided at a forward edge or location of the instrument panel structure 20, and as such may extend from the upper surface 22 of the instrument panel structure 20 towards the windscreen 15 of the vehicle 1.

As shown in Figure 2, the trim panel 30 comprises a rear-view display unit 200. The rear-view display unit 200 is therefore positioned adjacent the upper surface 22 of the instrument panel structure 20 and/or towards the lower edge of the windscreen 15 as viewed from a vehicle operator within the vehicle cabin 100.

Notably, it has been found that by positioning the rear-view display unit 200 at a more forward position within the vehicle cabin 100, the rear-view display unit 200 can be placed closer to the vehicle operator's nominal field-of-view. This helps to improve visual comfort since the forward position of the rear-view display unit helps to reduce the amount by which the eye of the vehicle operator needs to adjust when switching between viewing the road and the rear-view display unit 200.

Furthermore, it shall also be appreciated that by positioning the rear-view display unit 200 adjacent the upper surface 22 of the instrument panel structure 20, the rear-view display unit 200 is positioned closer to the vehicle operator's nominal "look-down-angle". This helps to further improve user eye comfort since, again, the amount by which the eye of the vehicle operator needs to adjust when switching between viewing the road and the rear-view display unit 200 is reduced.

In the illustrated embodiment, the rear-view display unit 200 sits substantially flush with a front surface 31 of the trim panel 30. However, in other embodiments, it will be appreciated that the trim panel 30 and the rear-view display unit 200 may be provided as separate components. Furthermore, it shall also be appreciated that in some alternative embodiments, the vehicle cabin 100 may comprise a rear-view display unit 200 upstanding from the upper surface 22 of the instrument panel structure 20 with no trim panel 30.

The rear-view display unit 200 is configured to display an image of an area behind the vehicle 1. The vehicle 1 may therefore comprise a camera 40 (shown in Figure 1) arranged to capture an image of the area to the rear of the vehicle 1 during use.

The rear-view display unit 200 may be configured to display a live stream of the image captured by the camera 40 such that a vehicle operator can see an image of the area behind the vehicle 1 in real time during use. As such, the rear-view display unit 200 may replace a traditional rear-view mirror often provided in vehicle cabins.

It shall also be appreciated that in some embodiments, the rear-view display unit 200 may be configured to display only an image from the camera (i.e. no further vehicle information) to reduce the likelihood of the vehicle operator becoming distracted when viewing the rear-view display unit 200.

Referring still to Figure 2, it may be beneficial to position the rear-view display unit 200 such that it is easily visible to a vehicle operator. This may be achieved, for example, by positioning the rear-view display unit 200 in the centre of the width of the vehicle cabin 100 (optionally also in the centre of the instrument panel structure 20). This may further be beneficial since a common rear-view display unit position may be used for both left-hand and right-hand drive vehicles (i.e. vehicles where a vehicle operator sits towards the left and the right of the vehicle respectively). Similarly, it may be beneficial to provide the rear-view display unit 200 in the centre of the trim panel 30 such that a common trim panel 30 can be used for both left-hand and right-hand drive vehicles.

To reduce their effect on a vehicle operator's view, it is beneficial to minimise the height H1 by which the rear-view display unit 200 and/or the trim panel 30 extends above the upper surface 22 of the instrument panel structure 20.

As such, in the illustrated embodiment, the rear-display unit 200 may extend upwardly away from the upper surface 22 of the instrument panel 200 to a height of less than 400 millimetres, optionally less than 300 millimetres, further optionally less than 250 millimetres.

Referring now to Figures 3 to 5, the rear-view display unit 200 shall be described in further detail.

As shown in Figure 3, the rear-view display unit 200 is made up of a printed circuit board (or PCB) 210, a rear-view display screen 220 which is electrically connected to the printed circuit board 210, a display unit housing 230 for encasing the printed circuit board 210 and the rear-view display screen 220, and a cover portion 240.

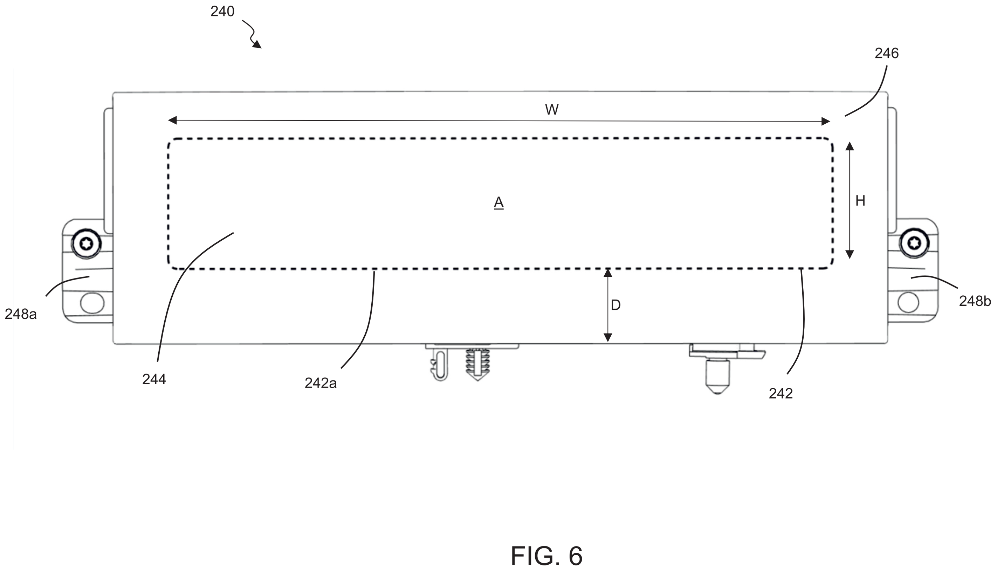

The rear-view display screen 220 comprises an active display area A (shown in Figure 6) which is an area of the rear-view display screen 220 on which an electronic image may be displayed.

The printed circuit board 210 is provided in the form of an electronic assembly and comprises a plurality of electrically conductive pathways (not shown) which are configured for receiving electrical signals from the camera 40 and transmitting said signals to the rear-view display screen 220 so that the image(s) captured by the camera 40 can be displayed on the active display area A.

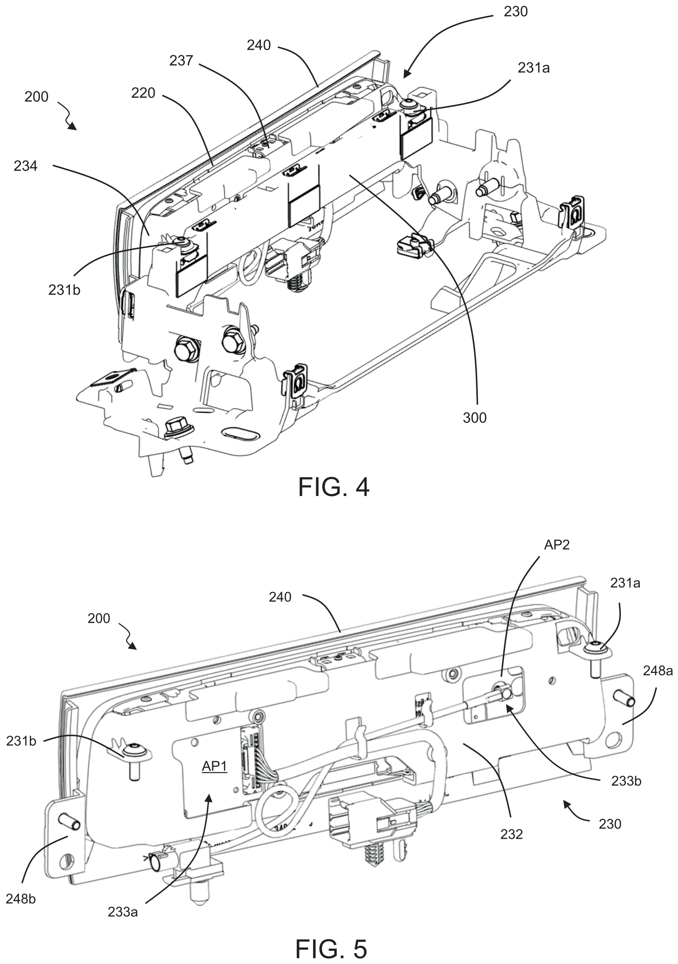

Referring now to Figures 4 and 5, the display unit housing 230 comprises a base portion 232 and at least one peripheral sidewall 234, extending substantially perpendicular to the base portion 232, which together define a cavity 236 (shown in Figure 3) within which the printed circuit board 210 and the rear-view display screen 220 are located.

The display unit housing 230 is typically formed of a polymeric material including, but not limited to, polypropylene, polyurethane, acrylonitrile butadiene styrene (ABS), and/or polyvinyl chloride (PVC). **The** use of such materials is generally beneficial due to their lightweight properties and the ease at which polymeric materials can be moulded (e.g., via injection moulding). However, it shall be appreciated that in other embodiments, other types of material may be utilised.

As shown in Figures 4 and 5, in the illustrated embodiment the base portion 232 of the display unit housing 230 comprises a pair of rearwardly extending projections (or tabs) 231a, 231b for mounting the rear-view display unit 200 (e.g., via suitable fasteners) to a corresponding bracket 300 which, in turn, secures the rear-view display unit 200 to the instrument panel 20 provided in the vehicle cabin 100.

As shown in Figure 4, the pair of rearwardly extending projections 231a, 231b are designed to act as spacers thereby ensuring that a space (or air-gap) is maintained between the display unit housing 230 and the mounting bracket 300 which helps air to circulate about the rear of display unit housing 230 during use. It shall also be appreciated that the provision of such projections 231a, 231b helps to minimise the number of thermal contact points between the rear-view display unit 200 and the mounting bracket 300.

The mounting bracket 300 is not central to the present invention and so, for conciseness, shall not be described in further detail.

In the illustrated embodiment, a plurality of apertures 233a, 233b (or "cut-outs") are also provided in the base portion 232 of the display unit housing 230 to allow air to circulate about the rear-view display screen 220 and/or the printed circuit board 210 housed within the cavity 236.

It has been found that the provision of such apertures 233a, 233b helps to optimise air circulation around the cavity 236 and therefore helps to improve the overall cooling afforded to the respective components housed therein.

However, it shall be appreciated that in alternative embodiments, the rearwardly extending projections 231a, 231b and/or the plurality of apertures 233a, 233b may be omitted.

As shown in Figure 5, the first of said apertures 233a is located proximate to a first lateral edge (e.g., a left-hand edge) of the display unit housing 230 and the second of said apertures 233b is located proximate to a second lateral edge (e.g., a right-hand edge) of the display unit housing 230, opposite said first lateral edge. In other words, in the illustrated embodiment, the apertures 233a, 233b are spaced apart in the lateral (Y) direction.

In the illustrated embodiment, the first of said apertures 233a has a first area AP1 and the second of said apertures 233b has a second area AP2 which is less than that of AP1. In other words, the first aperture 233a is larger than the second aperture 233b. However, it shall be appreciated that in alternative embodiments, the first 233a and second 233b apertures may be of approximately equal size, or, in yet further alternatives, the second aperture 233b may be larger than the first aperture 233a.

In the illustrated embodiment, the first 233a and second 233b apertures are substantially rectilinear (e.g., square or rectangular) in shape. However, it shall be appreciated that in other embodiments, the first 233a and second apertures 233b may be differently shaped. For example, in some embodiments, the first 233a and second 233b apertures may be substantially circular or ovular.

Referring back to Figure 3, the printed circuit board 210 is secured within the cavity 236 of the display unit housing 230 via one or more fasteners 238. The one or more fasteners 238 extend through corresponding apertures (not shown) provided in the printed circuit board 210 and couple the printed circuit board 210 to the display unit housing 230.

Meanwhile, the rear-view display screen 220 is secured to the display unit housing 230 via a series of forwardly extending tabs 237 (shown in Figure 4) which are disposed at regular intervals along the upper peripheral sidewall 234a of the display unit housing 230 and engage with corresponding slots (not shown) provided in a rear (or aft) surface of the rear-view display screen 220.

Referring still to Figure 3, the printed circuit board 210, rear-view display screen 220, display unit housing 230 and the cover portion 240 are spaced apart in the fore-aft (Y) direction such that a series of air channels are defined between said components.

Notably, a first air channel 250 is defined between the cover portion 240 and the front (or fore) surface of the rear-view display screen 220, a second air channel 252 is defined between the rear (or aft) surface of the rear-view display screen 220 and the front (or fore) surface of the printed circuit board 210, and a third air channel 254 is defined between the rear (or aft) surface of the printed circuit board 210 and the base portion 232 of the display unit housing 230.

It has been found that the provision of such air channels 250, 252, 254 helps to further optimise air circulation around the various components housed within the cavity 236 and hence helps to improve the overall cooling afforded to the said components during use.

Referring finally to Figure 6, the cover portion 240 of the rear-view display unit 200 depicted in Figures 3 to 5 shall now be described in greater detail.

As shown in Figure 6, the cover portion 240 is positioned in front of the rear-view display screen 220 and comprises a viewing window 242 through which at least a portion of the active display area A is visible. The cover portion 240 also comprises an integrated shroud 246 which extends around a periphery of the viewing window 242 and covers at least a portion of the active display area A such that said covered portion(s) are not visible to the vehicle operator.

In the illustrated embodiment, the cover portion 240 of the rear-view display unit 200 is formed of a transparent material (e.g., glass or polycarbonate) and covers substantially all of the active display area A of the rear-view display screen 220.

Meanwhile, the integrated shroud 246 which extends around the viewing window 242 is substantially opaque. As such, it shall be appreciated that in the illustrated embodiment, the area(s) of the cover portion 240 which are not covered by the integrated shroud 246 define the viewing window 242.

In the illustrated embodiment, the viewing window 242 comprises a convexly-curved lens 244 having a radius of curvature in the vertical (Z axis) direction in the range of 150mm to 200mm.

It has been found that the provision of a convexly curved lens 244 helps to provide the rear-view display unit 200 with adjusted display magnification and therefore enables the rear-view display unit 200 to be located further away from the vehicle operator within the vehicle cabin 100. It has also been found that incorporating the aforementioned degree of curvature into the lens helps to reduce glare. However, in other embodiments, the lens 244 may be substantially straight (or unbent).

It shall also be appreciated that in other embodiments, the cover portion 240 may instead comprise a cut-out region (akin to a letterbox) which defines the viewing window 242. In such embodiments, the cover portion 240 may be formed of an opaque material and hence the integrated shroud 246 may be omitted.

It shall also be appreciated that in some embodiments, the cover portion 240 may be concavely-curved in the horizontal (X-axis) direction such that the radius of curvature of the cover portion 240 matches the corresponding radius of curvature of the front surface 31 of the trim panel 30. This helps to ensure that the cover portion 240 of the rear-view display unit 200 sits substantially flush with the front surface 31 of the trim panel 30.

As shown in Figure 6, the cover portion 240 also comprises a pair of laterally-extending tabs 248a, 248b for mounting the cover portion 240 (via corresponding fasteners) to the mounting bracket 300, thereby securing the cover portion 240 to the instrument panel 20.

Referring now to the viewing window 242, it shall be appreciated that the cover portion 240 is designed so as to shroud (or obscure) at least a portion of the active display area A from the vehicle operator and hence the viewing window 242 has an area which is less than that of the active display area A.

Notably, it has been found that traditional "roof mounted" rear-view display screens (such as the ClearSight^{®} rear-view display unit) are not ergonomically shaped for mounting at other regions about the vehicle cabin 100.

As such, the viewing window 242 of the rear-view display unit 200 of the claimed invention is designed to present the vehicle operator with a different, more ergonomically shaped viewing area.

For example, in the illustrated embodiment, the viewing window 242 of the cover portion 240 is substantially rectangular and hence has a different shape to that of the active display area A of the rear-view display screen 220 which, in the illustrated embodiment, is substantially trapezoidal.

Notably, it has been found that rectangular-shaped viewing windows are particularly ergonomic for rear-view display units 200 which are mounted away from the roof structure 13 of the vehicle cabin 100.

However, it shall be appreciated that in other embodiments, the viewing window 242 may be of a different shape.

Furthermore, in the illustrated embodiment, the dimensions of the viewing window 242 have also been specifically selected help to ensure that the rear-view display unit 200 is ergonomically designed for the widest possible user percentile range.

Notably, in the illustrated embodiment, the viewing window 242 has a height (H) in the range of 200mm to 250mm and a width (W) in the range of 40mm to 50mm. However, in other embodiments, the viewing window 242 may exhibit a different height and/or width.

It shall also be appreciated that in the illustrated embodiment, the bottom edge 242a of the viewing window 242 is spaced apart from the upper surface 22 of the instrument panel 20 by a distance (D) of at least 5mm, and optionally by a distance (D) of approximately 8mm.

Notably, it has been found that spacing the viewing window 242 from the instrument panel 20 in this manner affords the vehicle operator with better visibility of the active display area A over the main display unit 50 provided on the instrument panel 20 of the vehicle 1.

As such, as described above, the rear-view display unit 200 of the claimed invention is able to shroud portions of the rear-view display screen 220 and thereby ensures that the vehicle operator is only able to view an "ergonomically optimal" portion of the rear-view display screen 220 during operation of the vehicle 1.

It will be appreciated that various changes and modifications can be made to the present invention without departing from the scope of the present application.

## Claims

1. A rear-view display unit for an automotive vehicle, comprising:
a printed circuit board;
a rear-view display screen electrically connected to the printed circuit board, said rear-view display screen having an active display area;
a display unit housing for encasing the printed circuit board and the rear-view display screen; and
a cover portion positioned in front of the rear-view display screen, said cover portion comprising a viewing window through which at least part of the active display area is visible,
wherein the active display area has a first area, and wherein the viewing window has a second area which is less than the first area.

2. The rear-view display unit according to claim 1, wherein the cover portion comprises an integrated shroud extending around a periphery of the viewing window.

3. The rear-view display unit according to claim 1 or 2, wherein the viewing window comprises a lens.

4. The rear-view display unit according to claim 3, wherein the viewing window comprises a convexly curved lens.

5. The rear-view display unit according to claim 4, wherein the convexly curved lens has a radius of curvature in the range of 150mm to 200mm.

6. The rear-view display unit according to any preceding claim, wherein the cover portion comprises a pair of laterally-extending tabs for mounting the cover portion to a corresponding mounting bracket.

7. The rear-view display unit according to any preceding claim, wherein the first area has a first shape, and wherein the second area has a second shape which is different to the first shape.

8. The rear-view display unit according to any preceding claim, wherein the first area is trapezoidal.

9. The rear-view display unit according to any preceding claim, wherein the second area is rectangular.

10. The rear-view display unit according to any preceding claim, wherein the display unit housing further comprises a pair of rearwardly extending projections for mounting the rear-view display unit to a corresponding mounting bracket.

11. The rear-view display unit according to any preceding claim, wherein the printed circuit board, the rear-view display screen, the display unit housing and the cover portion are spaced apart in the fore-aft direction such that a first air channel is defined between the cover portion and the rear-view display screen, a second air channel is defined between the rear-view display screen and the printed circuit board, and a third air channel is defined between the printed circuit board and the display unit housing.

12. The rear-view display unit according to any preceding claim, wherein the display unit housing comprises a base portion and at least one peripheral sidewall which together define a cavity, and wherein the base portion comprises a plurality of apertures configured to allow air to circulate about the rear-view display screen and/or the printed circuit board housed within said cavity.

13. A rear-view display system for an automotive vehicle, comprising:
a camera configured to capture an image of an area behind an automotive vehicle during use, and
a rear-view display unit according to any of the preceding claims for displaying said image to a vehicle operator.

14. A vehicle comprising the rear-view display system according to claim 13.

15. The vehicle according to claim 14, wherein the vehicle comprises an instrument panel structure, and wherein the rear-view display unit is positioned adjacent to an upper surface of said instrument panel structure.
